# EUROPÄISCHE PATENTANMELDUNG

(11) **EP 2 388 887 A2**
(43) Veröffentlichungstag der Anmeldung: **23.11.2011**
(21) Anmeldenummer: 11003729.8
(22) Anmeldetag: 06.05.2011
(51) Int. Cl.: H02K 1/14, H02K 15/095

(54) **Polkette**

(30) Priorität: 19.02.2011 DE 102011011809; 18.05.2010 DE 102010020805
(71) Anmelder: Aumann GMBH, 32339 Espelkamp (DE)
(72) Erfinder: Hagedorn, Jürgen, 32312 Lübbecke (DE); Lüttge, Wolfgang, 31787 Hameln (DE)
(74) Vertreter: Schober, Mirko

(57) **Zusammenfassung**

Bei einem Verfahren zur Bewicklung von in Kreisringsegmente aufgeteilten Statoren von Innenläufermotoren im Anordnungs-Vorstadium einer linearen Polkette 7 wird eine Mehrzahl Vollpolsegmente 2 vor dem Bewickeln mit mindestens einem Kunststoffteil 1, 3 untereinender verbunden.

## Beschreibung

Gegenstand der Erfindung ist ein Verfahren zur Bewicklung von in Kreisringsegmente aufgeteilten Statoren von Innenläufermotoren im Anordnungs-Vorstadium einer linearen Polkette nach dem Oberbegriff des Anspruchs 1, eine Vorrichtung zur Durchführung des Bewicklungsverfahrens nach dem Oberbegriff Anspruch 5 und ein Kunststoffteil zur Verwendung als Hilfsmittel in einem Bewicklungsverfahren nach dem Oberbegriff von Anspruch 13.

Statoren sind Bauteile von Motoren mit einem Innenläufer, deren mit elektrischen Spulen zu bewickelnden Polzähne radial nach innen gerichtet sind und an diesem Innendurchmesser durch schmale Nutschlitze beabstandet sind. Das erschwert die Zugänglichkeit der Wickelräume mit einer Draht verlegenden Düsennadel bei Anwendung des Nadelwickelverfahrens.

Es ist deshalb in der Technik bekannt, Statoren von vornherein als einen Satz einzelner Segmente vorzufertigen, deren Segmente aus einem Kreisringsektor entsprechend dem Anteil eines Polzahnbereiches am Gesamtumfang des Stators besteht.

Vollpolsegmente bestehen mithin außer aus dem zu bewickelnden Polzahn auch aus dem anteiligen Joch- oder Rückschlussringabschnitt.

Die so beschaffenen einzelnen Vollpolsegmente sind für eine Bewicklung gut zugänglich, ohne geometrische Einschränkungen für die Bewicklungselemente, wie einer Drahtverlegedüse durch den engen Nutschlitz im Falle eines unsegmentierten Innenläufer-Stators. Für die anschließende Fügung der bewickelten Vollpolsegmente zum geschlossenen Stator haben sich formschlüssige Paarungskonturen an den Joch-Enden der Vollpolsegmente bewährt, die konkav bzw. konvex zueinander passfähig sind und eine Art Gelenkstelle bilden. Die Ausgestaltung dieser paarenden Gelenkstelle ist durch zahlreiche Lösungen des Standes der Technik modifiziert worden. Als Beispiel wird hier die Druckschrift EP 0 833 427 A1 genannt.

Um den Vorteil wickeltechnisch guter Zugänglichkeit von Vollpolsegmenten mit der Möglichkeit zu paaren, die Spulen der Statorwicklung schon funktionsmäßig untereinander verbunden herzustellen, nutzt man die paarenden Gelenkstellen dazu, die Vollpolsegmente für die Bewicklung in einer linearen Reihe auszurichten. Diese Anordnung wird als Polkette bezeichnet.

Aus der Vielzahl an Druckschriften, in denen Möglichkeiten für die Gestaltung der Gelenk- und der Verschlussstelle einer solchen Polkette offenbart sind, werden an dieser Stelle beispielsweise die Druckschriften EP 0 969 581 B1, EP 0 833 427 A1, EP 1 598 918 A1 und WO 2007/ 033639 A1 genannt.

Erkennbar ist, dass die Gelenkverbindung entweder durch die Blechpakete oder aber durch die Isolierteile realisiert werden kann.

Die vorgenannten Druckschriften beziehen sich dabei allein auf die Produktgestaltung, aber lassen die Ausgestaltung des Verfahrens und die entsprechende Vorrichtung für eine rationelle und serienmäßige Ausführung der anschließenden Statorbildung durch Runden oder Rollieren der Polkette offen.

Aufgabe der Erfindung ist es daher, ein Verfahren zur Bewicklung von in Kreissegmente aufgeteilten Statoren von Innenläufermotoren im Anordnungs-Vorstadium einer linearen Polkette zu entwickeln, bei dem die Vollpolsegmente durch Aufbringen von separaten und wieder entfernbaren Verbindungsmitteln zum Bewickeln zu einer linearen Polkette zusammengefasst werden und dabei eine optimale Zugangsmöglichkeit zu den einzelnen Vollpolsegmenten für das Bewickeln erhalten bleibt.

Aufgabe der Erfindung ist außerdem, eine Vorrichtung zu entwickeln, mit welcher das Verfahren zur Bewicklung von in Kreissegmente aufgeteilten Statoren von Innenläufermotoren im Anordnungs-Vorstadium einer linearen Polkette durchführbar ist.

Ferner besteht die Aufgabe der Erfindung darin, ein Kunststoffbauteil verfügbar zu machen, welches im oben genannten Verfahren die einzelnen Vollpolsegmente definiert isoliert und für den Bewicklungsvorgang zusammenhält und welches nach dem Bewickeln definiert durchtrennbar ist.

Gelöst wird diese Aufgabe durch ein Verfahren gemäß des Oberbegriffs von Anspruch 1 durch die Merkmale des kennzeichnenden Teils von Anspruch 1, eine Vorrichtung gemäß des Oberbegriffs des Anspruchs 5 durch die Merkmale des kennzeichnenden Teils von Anspruch 5 und ein Kunststoffbauteil zur Verwendung als Hilfsmittel gemäß des Oberbegriffs von Anspruch 13 durch die Merkmale des kennzeichnenden Teils von Anspruch 13.

Anspruch 1 sieht ein Verfahren zur Bewicklung von in Kreissegmente aufgeteilten Statoren von Innenläufermotoren im Anordnungs-Vorstadium einer linearen Polkette vor, bei dem eine Mehrzahl Vollpolsegmente vor dem Bewickeln mit mindestens einem Kunststoffteil untereinander verbunden wird.

Durch das erfindungsgemäße Verfahren können die einzelnen Vollpolsegmente zu einer linearen Polkette zusammengefasst werden, ohne dass die Vollpolsegmente selbst Halte- oder Verbindungsmöglichkeiten aufweisen, die wiederum den Zugang zu den Vollpolsegmenten zum Bewickeln behindern können. Das Kunststoffbauteil kann in den für das Bewickeln optimalen Bereichen der Vollpolsegmente angebracht und für nachfolgende Verfahrensschritte auch wieder definiert entfernt werden.

Vorteilhafte Ausgestaltungen und Weiterbildungen des Verfahrens nach Anspruch 1 ergeben sich aus den Unteransprüchen 2 bis 4.

Eine vorteilhafte Variante sieht ein Verfahren nach Anspruch 2 vor, bei dem nach dem Bewickeln zumindest ein Teil eines Kunststoffteils abgetrennt wird.

Durch ein nachträgliches Entfernen eines Teils eines Kunststoffbauteils können die linearen Polketten für weitere Verfahrensschritte vorbereitet werden, bei denen im Vergleich zum Bewickeln eine geringere Verbindung der einzelnen Vollpolketten angestrebt wird.

Eine weitere vorteilhafte Variante sieht ein Verfahren nach Anspruch 3 vor, bei dem die Vollpolsegmente durch das Abtrennen zumindest eines Teils eines Kunststoffteils vereinzelt werden.

Dadurch, dass die Vollpolsegmente wieder vereinzelt werden, können diese nachfolgenden Verfahrensschritten zugeführt werden, die einzelne bewickelte Segmente benötigen.

Vorteilhaft ist außerdem eine Variante des Verfahrens aus Anspruch 4, bei der die bewickelte Polkette durch einen Rundungs- oder Rollier-Vorgang in eine zylindrische Endgestalt überführt wird.

Die zylindrische Endgestalt der bewickelten Polkette kann als Stator eines Innenläufermotors eingesetzt werden.

Anspruch 5 sieht eine Vorrichtung zur Durchführung eines Verfahrens nach Anspruch 1 bis 4 vor, welche eine Bewicklungseinrichtung und eine Halteeinrichtung aufweist, wobei die Halteeinrichtung zur Aufnahme einer mit mindestens einem Kunststoffteil untereinander verbundenen Mehrzahl Vollpolsegmente, die sich im Anordnungs-Vorstadium einer linearen Polkette befinden, geeignet ist.

Durch eine Vorrichtung mit Halteeinrichtung und Bewicklungseinrichtung wird eine schnelle maschinelle Bewicklung der linearen Polkette ermöglicht.

Vorteilhafte Ausgestaltungen und Weiterbildungen der Vorrichtung nach Anspruch 5 ergeben sich aus den Unteransprüchen 6 bis 12.

Vorteilhaft ist eine Vorrichtung nach Anspruch 6, bei der die Bewicklungseinrichtung um eine zur Reihungsrichtung der Pol-kette parallele Achse (X), vorzugsweise in einem Winkelbereich von min. 135°, schwenkbar ausgeführt ist.

Die schwenkbare Ausführung der Bewicklungseinrichtung ermöglicht eine differenzierte Führung des Drahtes zum Bewickeln im Schaltungsbereich.

Vorteilhaft ist weiter eine Vorrichtung nach Anspruch 7, die vorsieht, dass die Halteeinrichtung der Polkette entlang einer, im Wesentlichen rechtwinklig zu zwei Bewegungsachsen (Y, Z) der Bewicklungseinrichtung verlaufenden, Bewegungsachse (X), vorzugsweise durch mindestens einen Linearmotor, verfahren werden kann, wobei vorzugsweise die Bewegungsachsen (Y, Z) der Bewicklungseinrichtung im Wesentlichen rechtwinklig zueinander angeordnet sind.

Durch die Bewegung um verschiedene Bewegungsachsen wird eine Vielzahl an Möglichkeiten einer Bewicklung eröffnet.

Vorteilhaft ist außerdem eine Vorrichtung nach Anspruch 8, die vorsieht, dass die Bewicklungseinrichtung eine Mehrzahl Bewicklungselemente, vorzugsweise Drahtführer eines Nadelwickelsystems, aufweist, die für die simultane Bewicklung einer Mehrzahl Vollpolsegmente einer Polkette, vorzugsweise der simultanen Bewicklung einer Mehrzahl Vollpolsegmente verschiedener Phasen, und/oder einer Mehrzahl Polketten geeignet sind.

Durch eine simultane Bewicklung einer Mehrzahl an Polketten, insbesondere von Polketten verschiedener Phasen, werden auf effiziente Weise verschiedene Anordnungsmöglichkeiten der Polketten im Stator erreicht.

Vorteilhaft ist ferner eine Vorrichtung nach Anspruch 9, die vorsieht, dass ein Elektromagnet für den Transfer der Polketten von der Halteeinrichtung einer Bewicklungsstation zur Halterung einer Rundungs- oder Rollierstation vorgesehen ist, der vorzugweise so ausgelegt ist, dass er geeignet ist, entstandene Aufmagnetisierungen der Vollpolsegmente zu löschen.

Eine derartige Vorrichtung mit einem Elektromagneten hat den Vorteil, gleichzeitig eine Transfereinheit und eine Entmagnetisierungseinheit für mögliche Aufmagnetisierungen der Vollpolsegmente zu schaffen.

Besonders vorteilhaft ist eine Vorrichtung nach Anspruch 10, bei der vorgesehen ist, dass zur Rollierung der Polkette eine Einrichtung, vorzugsweise ein Scara-Roboter, vorgesehen ist, die eine Vorrichtung zur Überführung der Anordnung der Vollpolsegmente in deren zylindrische Endgestalt, vorzugsweise bei vorgegebenem oder vorgebbarem Innendurchmesser der zylindrischen Endgestalt, aufweist.

Durch automatisiertes Anordnen der Vollpolsegmente in deren zylindrische Endgestalt werden die Herstellungsdauer und damit die Herstellungskosten gesenkt, da eine rationelle und serienmäßige Statorbildung durch Rollieren der Polketten ermöglicht wird.

Besonders vorteilhaft ist außerdem eine Vorrichtung nach Anspruch 11, welche derart ausgestaltet ist, dass eine Vorrichtung zum stoffschlüssigen Verbinden der Vollpolsegmente vorgesehen ist.

Aufgrund der stoffschlüssigen Verbindung sind die Vollpolsegmente endgültig zu einem Stator vereint und der Stator weiterverarbeitbar.

Besonders vorteilhaft ist überdies auch eine Vorrichtung nach Anspruch 12, bei der vorgesehen ist, dass Fixiervorrichtungen zur Sicherung der Vollpolsegmente nach dem Abtrennvorgang vorgesehen sind.

Die Fixiervorrichtungen schützen die abgetrennten Vollpolsegmente vor Beschädigungen, welche beispielsweise durch Verrutschen auftreten könnten.

Anspruch 13 sieht ein Kunststoffteil zur Verwendung als Hilfsmittel in einem Verfahren nach Anspruch 1 bis 4 vor, wobei das Kunststoffteil eine Mehrzahl Isolierbereiche, die zur Isolierung der Drahtwicklung auf einem Vollpolsegment geeignet sind, und mindestens einen, vorzugsweise spangenartigen, Verbindungsbereich zur Verbindung der Isolierbereiche aufweist.

Das Kunststoffteil nach Anspruch 13 hat den Vorteil, die Vollpolsegmente eines Innenläufer-Stators durch eine spezifische Produktgestaltung der aufsteckbaren Kunststoffteile als Isolierteile zu einer linearen Polkette anzuordnen, wobei die gewünschten Isolierbereiche gebildet werden, und die hierzu benutzten Kunststoffteile als Verbindungsteile nach der Bewicklung so zu entfernen, dass das Runden oder Rollieren der bewickelten Vollpolsegmente zum ringförmigen Stator 26 unter Benutzung der einfachsten Variante einer formschlüssigen Paarungskontur an den Jochteil-Enden ausführbar ist.

Vollpolsegmente isoliert man entweder durch Umspritzen mit einem Isolierstoff oder durch paarig aufsteckbare Isolierteile (Kunststoffteile). Bei den Aufsteckteilen (Kunststoffteilen) handelt es sich um multifunktionelle Kunststoffspritzteile. Sie isolieren die Wicklung gegen das auf Massepotential liegende Eisen der Polblechpakete, sie bilden durch begrenzende Wandungen eine Kammer für die zu verlegenden Spulenwindungen und besitzen Drahtleitelemente für die Wicklungsenden und Spulenübergänge.

Erfindungsgemäß bedient sich das Wickelverfahren aufsteckbarer Isolierteile (Kunststoffteile), die nicht einzeln vorgefertigt, sondern mit angespritzten spangenartigen Verbindungsgliedern an ihren Stirnseiten verbunden einen Satz ergeben, mit so vielen Teilen wie der Stator Polsegmente hat.

Die Gestaltung dieser aufsteckbaren Isolierteil-Sätze (Kunststoffteil-Sätze) kann unterschiedlich sein für die Bestückung der Stator-Schaltseite und der Stator-Nichtschaltseite.

Die vorgenannten spangenartigen Verbindungsglieder beginnen und enden auf angespritzten klotzartigen Zugankern, die radial auswärts gerichtet am Umfang der an der Blechpaket-Stirnseite anliegenden Grundplatte des Isolierteiles (Kunststoffteiles) sitzen. Die Zuganker sind vorzugsweise ankerförmig, hammerförmig oder T-förmig gestaltet für den formschlüssigen Eingriff von ausrüstungsseitigen Halteklauen-Paaren, mit denen die Polkette linear ausgerichtet wird.

Die so fixierte Polkette wird in einem durchgängigen Zyklus mit einer vorzugsweise dreiphasigen Polzahnwicklung bewickelt. Das wird im Nadelwickelverfahren mit einer Gruppe von drei Drahtverlegedüsen ausgeführt. Die Vollpolsegmente sind dabei vertikal oder horizontal gerichtet.

Die windungsbildende Bahnkurve der Drahtverlegedüsen um den zu bewickelnden Polzahn wird dabei zusammengesetzt einerseits aus der Hubbewegung der die Drahtverlegedüsen tragenden Drahtführer-Traverse, die mit einem 3-Achsen-Getriebe bewegt wird, das auch die Verlegebewegung der Düse über der Wickelbreite des Polzahns übernimmt und andererseits durch die Querbewegungen an den Umkehrpunkten des Hubes, die von der linear verschiebbaren Polketten-Halterung ausgeführt wird. Die Polkettenhalterung befindet sich auf einem Schlitten, der Teil eines speziellen Linearantriebs ist, der für die erforderliche Dynamik der Bewegungen bei gleichzeitig ausreichender Kraftentwicklung ausgewählt wurde. Grundsätzlich ist eine bindungsbildende Bahnkurve der Verlegedüsen durch eine Relativbewegung zwischen Wickeldüse und den zu bewickelnden Bauteilen, insbesondere der Polzähne, möglich.

Aus der Patentschrift WO 2005/124974 A1 des Anmelders zu einer Wickelnadel mit schwenkbarer Drahtverlegedüse wurde für das erfindungsgemäße Wickelverfahren der Polkette eine Kipp-Lösung der gesamten Drahtführer-Traverse abgeleitet. Die Drahtführer-Traverse ist mit mindestens einer 3er-Gruppe Drahtverlegedüsen bestückt. In vorteilhafter Weise erhält die Drahtführer-Traverse einen Schwenkwinkel für das Kippen der Drahtverlegedüsen gegenüber der Bahnkurven-Ebene einer Windung von bis zu 135°. Dieser Schwenkwinkel wird genutzt, um den Draht im Schaltungsbereich differenziert zu führen.

Nach dem Wickelvorgang ist die gesamte Wicklung schaltungsrichtig ausgeführt einschließlich der je drei Anfänge und Enden der drei Wicklungsstränge.

Die Wicklung ist so fixiert, dass die Polkette für nachfolgende Operationen des Verfahrens handhabbar ist. Insbesondere sind die zwischen den Polsegmenten verlegten Überleitungsdrähte so platziert und in ihrer Länge optimiert, dass sie beim späteren Runden oder Rollieren zum ringförmigen Stator keinen Schaden nehmen. Die bewickelte Polkette wird aus der Halterung entnommen und zu einer Folgeoperation transferiert. Zum Transfer wird an den Polschuhen der Polsegmente ein Elektromagnet oder eine mechanische Haltevorrichtung angedockt und die Pol-kette für eine Trennoperation positioniert. In dieser Trennoperation werden die Zuganker mitsamt ihren Verbindungsspangen entfernt. Der Elektromagnet ist dabei zugleich so dimensioniert, dass er die während der Bewicklung vom Magnetsystem des Linearmotors eingetragene Aufmagnetisierung der Polpakete löscht.

Bevor der zum Transfer verwendete Elektromagnet wieder entfernt werden kann, wird die lineare Anordnung der Polkette durch einen Satz Greifer gesichert, die am Jochrücken der Vollpolsegmente andocken. So kann die Polkette nach Entfernen des Transfer-Elektromagneten oder der mechanischen Haltevorrichtung für die abschließende Rundungs- oder Rollier-Operation positioniert werden.

Das Runden oder Rollieren der linearen Polkette erfolgt nach dem Prinzip des Aufwickelns eines flachbahnigen Gutes auf eine an ihm rotierend vorbeigeführte Walze, indem der Anfang des Gutes winkelrichtig an der Walze festgelegt wurde. Im speziellen Anwendungsfall hat die zylindrische Walze einen Außendurchmesser, der dem Bohrungsdurchmesser des zu bildenden Stators entspricht. In einer Startposition des Rundungs- oder Rollier-Vorgangs wird das erste Vollpolsegment der Polkette durch ein Klemmelement in Achsrichtung der Walze an deren zylindrischem Mantel festgelegt. Indem die Walze rotierend und linear parallel an der vertikal gestellten Polkette vorbeigeführt wird, nehmen weitere mit ihr zusammenwirkende Klemmelemente jeweils ein nächstes Vollpolsegment mit, das sich formschlüssig mit dem vorher geklemmten Segment an der Mantelfläche paart. Die Übergangsdrähte der Wicklung zwischen den Polsegmenten können dank ihrer Längen-Optimierung und Platzierung beim Wickeln dieser Verlagerung folgen.

Die zwischen den Jochenden der Vollpolsegmente gewählte Paarung einer konvexen und einer konkaven Fügekontur erweist sich hierbei als vorteilhaft, weil gut einkämmend schließbar auch für das letzte anzulegende Segment.

Die Klemmelemente halten die an der Walze anliegenden und nun einen ringförmigen Stator bildenden Segmente nur auf einem zum Beispiel oberen Bereich ihrer Paketlänge. Damit ist der übrige Mantelbereich des Stators freiliegend und macht es möglich, dass die Walze den zunächst nur durch die Klemmung gehaltenen Stator in ein zylindrisches Interims-Gehäuse oder Rohr übergibt, aus dem der Stator bei späterer endgültiger Motormontage wieder entnommen werden kann. Die Klemmelemente werden gelöst und die Rundungs- oder Rollier-Einrichtung kann den nächsten Zyklus beginnen.

Weitere Eigenschaften, Merkmale und Vorteile der Erfindung werden nachfolgend anhand von Figuren zu bevorzugten Ausführungsformen näher veranschaulicht:
Figur 1 - zeigt die Bestückung der zu bewickelnden Vollpolsegmente durch die beiden erfindungsgemäßen Kunststoffteil-Reihen (Isolierteil-Reihen),
Figur 1A - stellt das Detail A aus Fig. 1 vergrößert dar,
Figur 1B - stellt das Detail B aus Fig. 1 vergrößert dar,
Figur 1C - zeigt einen Zuganker der Kunststoffteile (Isolierteile) einzeln in zwei Ansichten,
Figur 2A - zeigt eine zur Bewicklung angeordnete erfindungsgemäße Polkette,
Figur 2B - zeigt die Halterung der zu bewickelnden Polkette an einer Prismengruppe,
Figur 3A - zeigt ein Werkstückträger-Modul mit der Halterung nach Fig. 2B,
Figur 3B - zeigt schematisch in perspektivischer in Vorderansicht die Wickelstation,
Figur 3C - zeigt die Wickelstation aus Fig. 3B in Rückansicht,
Figur 4A - zeigt die an die Rundungs- oder Rollierstation umgesetzte Polkette vor dem Abtrennen der erfindungsgemäßen Verkettungs-Elemente,
Figur 4B - zeigt die an die Rundungs- oder Rollier-station umgesetzte Polkette nach dem Abtrennen der erfindungsgemäßen Verkettungs-Elemente,
Figur 5A - zeigt ausschnittsweise eine Vorderansicht der Baugruppe aus Fig. 4B gepaart mit der Rundungs- oder Rollierspindel,
Figur 5B - zeigt prinzipiell die Anordnung des Rundungs- oder Rollier-Roboters,
Figur 5C - zeigt das Transferprinzip bei der Umbildung der Polkette zum Stator,
Figur 6A - zeigt die vollständig zum Stator rollierte Polkette am Rollier-Roboter,
Figur 6B - zeigt die Zwischenablage der Statoren.

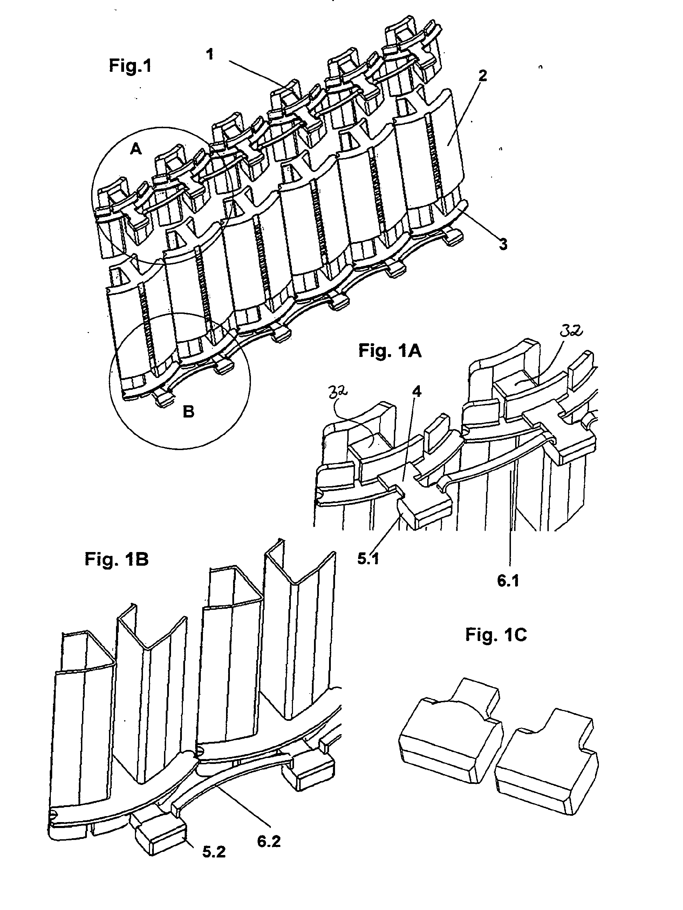

In Figur 1 wird eine erfindungsgemäß verbundene Reihe Kunststoffteile (Ober-Isolierteile) 1 auf passend ausgerichtete Vollpolsegmente 2 aufgesetzt und eine in gleicher Weise gefügte Reihe Kunststoffteile (Unter-Isolierteile) 3 vervollständigt die Isolierung bei gleichzeitiger Formierung der Polkette.

Figur 1A zeigt am vergrößerten Ausschnitt A der Fig. 1 die Gestaltung der erfindungsgemäßen Kopplung der Kunststoffteile (Isolierteile) 1, 3 durch an Basisblöcke 4 angesetzte Zuganker 5.1, die paarweise mit Spangen oder Scharnieren 6.1 verbunden sind. Diese Spangen oder Scharniere sind so geformt, dass sie einen Toleranzausgleich unterstützen.

Figur 1B zeigt am vergrößerten Ausschnitt B der Fig. 1 die Gestaltung der erfindungsgemäßen Kopplung der Kunststoffteile (Isolierteile) 1, 3 durch entsprechende Zuganker 5.2, die paarweise mit Spangen oder Scharnieren 6.2 verbunden sind. Diese Spangen oder Scharniere 6.2 sind bewusst anders gestaltet als an den Oberteilen.

In Figur 1C wird am Beispiel eines der Zuganker in zwei Ansichten seine Geometrie gezeigt. In seiner Geometrie greifen bei der Positionierung zum Wickelvorgang Zugklauen 9 ein.

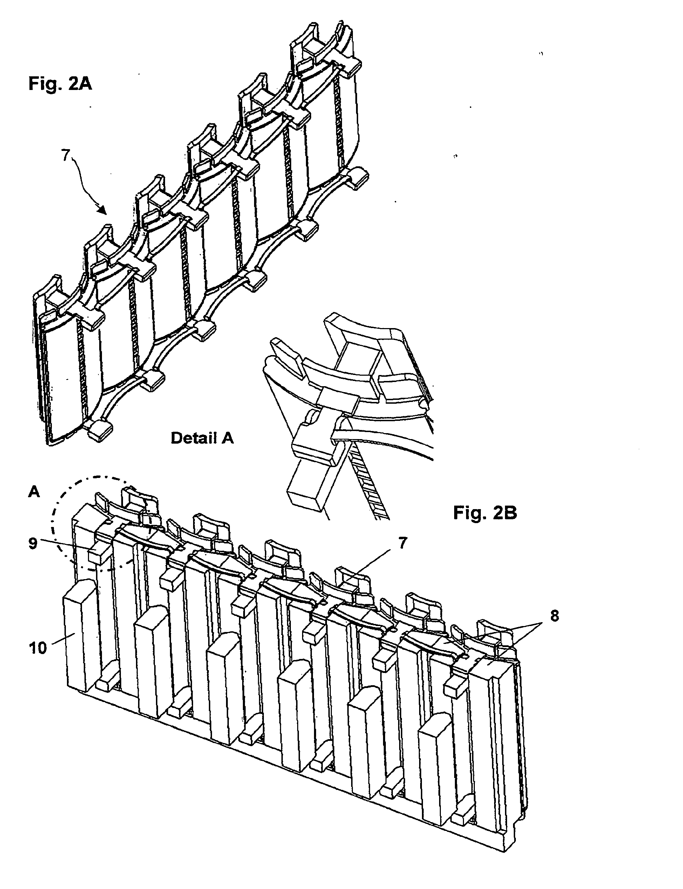

Figur 2A zeigt eine erfindungsgemäß gebildete Polkette 7. Allein durch Modifizierung der Länge der Poltaschen-Auskleidung der Kunststoffteile (Isolierteile) 1, 3 ist eine Verwendung der Kunststoffteile (Isolierteile) 1, 3 zur Polkettenbildung auch bei unterschiedlichen Statorbaulängen möglich, wie sie für einen Statorblechschnitt üblich sind. Zum Bewickeln wird die Polkette 7 nach Fig. 2A an eine Halterung gespannt, wie es die Fig. 2B erkennen lässt. Die Jochrücken der Vollpolsegmente 2 liegen an hier geteilt dargestellten Prismen 8 an und werden an diese mittels Zugklauen 9 herangezogen (Detail A Fig. 2B). Die Zugklauen 9 sind zum Beispiel die Bestückung eines 2-Finger-Parallelgreifers, der im Spannzustand spreizt und die Klauen formschlüssig in die Geometrie der Zuganker einführt.

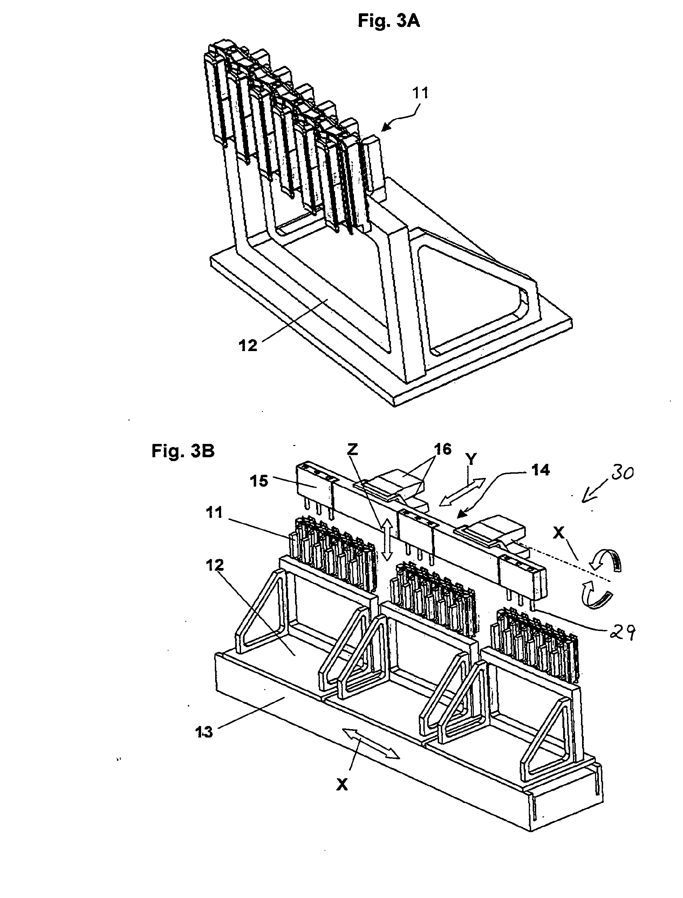

Figur 3A zeigt im Prinzip, dass die Halterung 11 mit der ausgerichteten Polkette an einen Werkstückträger 12 gesetzt wird. Drei Werkstückträger 12, bestückt mit Halterungen 11, wie in Fig. 3A gezeigt, werden gemäß prinzipieller Darstellung in Fig. 3B gemeinsam auf einen Linearmotor-Schlitten 13 montiert, mit dem sie parallel zu einer Bewicklungseinrichtung (Drahtführer-Traverse) 14 verfahren werden können. Die Bewicklungseinrichtung (Drahtführer-Traverse) 14 ist mit drei auswechselbaren Drahtführergruppen 15 bestückt, deren jede drei Drahtführer umfasst, die zueinander in einem Teilungsschritt der Halterung 11 bzw. ihrer Polkette distanziert sind. Die Bewicklungseinrichtung (Drahtführer-Traverse) 14 wird mittels eines nicht dargestellten 3-Achsengetriebes programmierbar bewegt. Dies zum einen in vertikaler Achsrichtung Z (siehe Pfeil) zur Ausführung der linearen Hubbewegung der windungsbildenden Drahtdüsen-Bahn, zum anderen senkrecht dazu in horizontaler Achsrichtung Y (siehe Pfeil) zur Ausführung der Ver-legebewegung über der Kammerbreite des Poles. Eine dritte Bewegung ist eine Schwenkbewegung um die Achsrichtung X (siehe Pfeile), realisiert über die Gelenkanbindung von zwei Paaren Parallelschubstangen 16, die das Schwenkprinzip nach WO 2005/ 124974 A1 applizieren, jedoch mit einem größeren Schwenkwinkel von 135°.

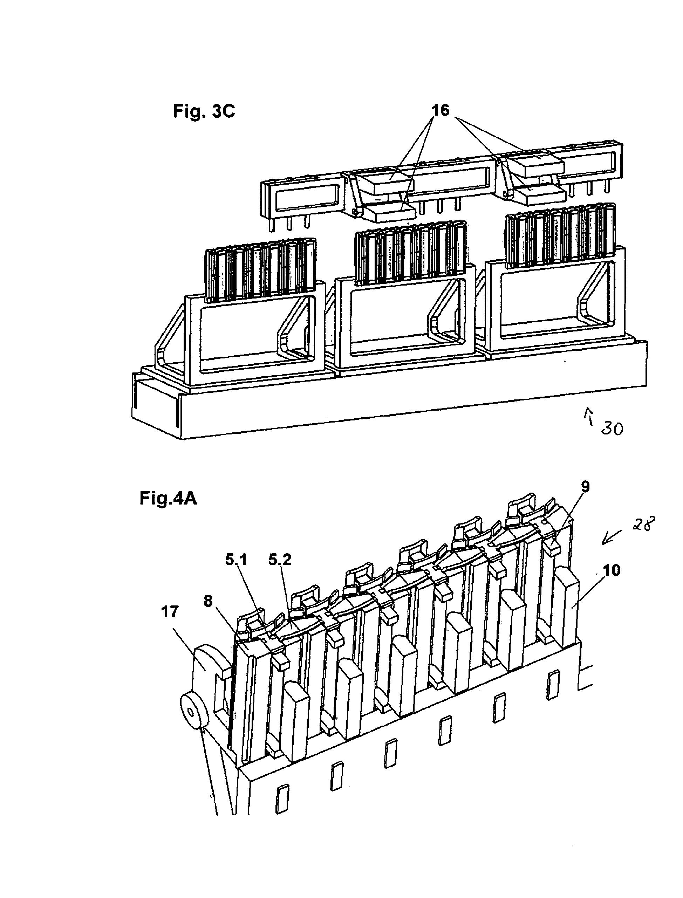

Figur 3C zeigt die Wickelstation aus Fig. 3B in der Rückansicht mit Blick auf die simultan bewickelten drei Polketten sowie auf die Gelenkanbindung der Parallelschubstangen 16. Die Bewicklung wird im Nadelwickelprinzip ausgeführt mit dem Vorteil besserer Zugänglichkeit der Wickelräume durch die Polanordnung als Kette. Die Bahnkurve der Drahtführer wird zusammengesetzt aus der Hubbewegung der Bewicklungseinrichtung (Drahtführer-Traverse) 14 und der linearen Bewegung des Linearmotor-Schlittens 13.

Im dargestellten Beispiel besteht eine Polkette aus sechs Vollpolsegmenten 2 und erhält eine 3-phasige Zahnpolwicklung, mithin gehören zwei Polspulen zu einem der drei Wicklungsstränge. Jeder der drei Drahtführer einer Gruppe 15 verlegt einen der drei Stränge. Dazu beginnt der erste Drahtführer am Segmentpol 1 mit der ersten Spule, der benachbarte zweite Drahtführer am Segmentpol 2 mit der ersten Spule des zweiten Stranges und der dritte Drahtführer am Segmentpol 3 mit der ersten Spule des dritten Stranges.

Unter Ausbildung von Übergangsdrähten, dies auch unter Nutzung der Schwenkmöglichkeit der Bewicklungseinrichtung (Drahtführer-Traverse) 14, wird der erste Drahtführer dann auf den Segmentpol 4 ausgerichtet und die beiden anderen Drahtführer auf die Segmentpole 5 bzw. 6, um die jeweils zweite Spule der drei Stränge zu wickeln, was mit alternierendem Wickelsinn zur ersten Spule erfolgen kann. Simultan wird der hier beschriebene Wickelzyklus auch an den beiden anderen Werkstückträgern 12 ausgeführt, was eine hohe Produktivität sichert. Nach der Bewicklung wird die Halterung 11 mit der Polkette 7 zur nachfolgenden Rundungs- oder Rollier-Operation umgesetzt, in der aus der Polkette 7 der zylindrische Stator entsteht. Die Umsetzung erfolgt unter Benutzung eines Elektromagneten oder einer mechanischen Haltevorrichtung, wobei der Elektromagnet vorzugsweise so dimensioniert ist, dass er die während der Bewicklung von dem Magnetsystem des Linearmotor-Schlittens 13 in den Vollpolsegmenten 2 erzeugte Aufmagnetisierung löscht.

Figur 4A zeigt die umgesetzte Halterung 11 an der Aufnahme der Rundungs- oder Rollierstation 31. Bei der Polkette 7 wird auf die Darstellung der Wicklung verzichtet. Die Aufnahme der Rollierstation 31 verfügt über zwei Gruppen von Elementen, die vor dem nachfolgenden Abtrennen der Zuganker 5.1 und Spangen oben 6.1 und entsprechend an den nicht dargestellten Zugankern 5.2 und Spangen oder Scharnieren unten 6.2 die ersatzweise Fixierung der Vollpolsegmente 2 an den Prismen 8 übernehmen. Es sind dies von vorne schwenkbar heranziehbare Andrückhebel 17.

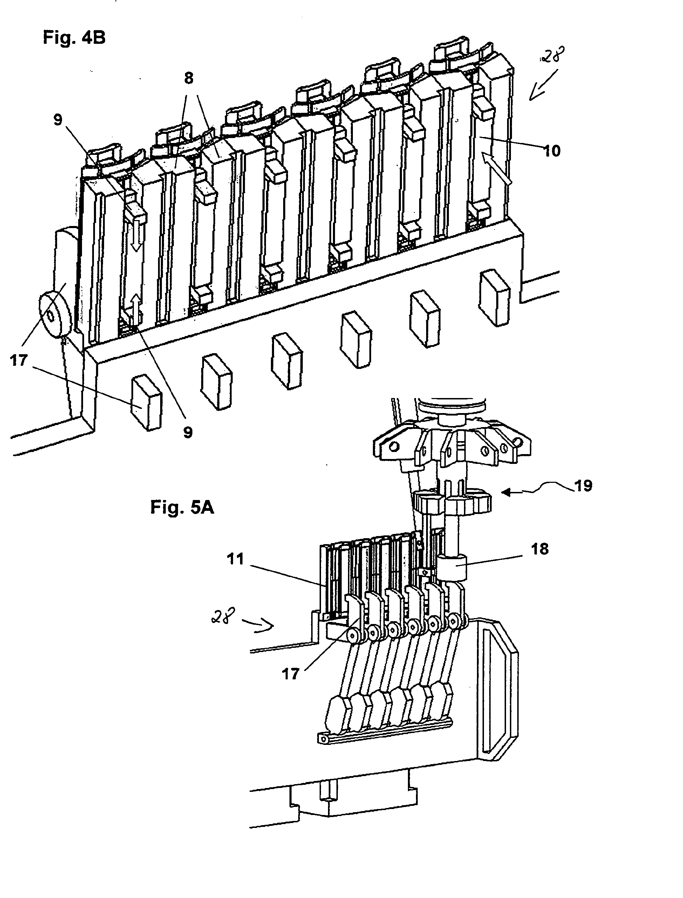

Figur 4B zeigt die gleiche Baugruppe wie in Fig. 4A nach dem Heranschwenken der Andrückhebel 17 und dem Ausklinken der Zugklauen 9 sowie dem Abtrennen der Zuganker 5.1 und Spangen oder Scharniere oben 6.1.

Figur 5A zeigt die Aufnahme der Rundungs- oder Rollierstation 31 im Zustand nach Fig. 4B von vorn mit den angezogenen Andrückhebeln 17 und gepaart mit dem Rundungs- oder Rollierwerkzeug 19, an dessen unterem Spindelende sich ein Rundungs- oder Rollierzylinder 18 befindet, dessen Außendurchmesser dem Innendurchmesser des zu bildenden Stators 26 entspricht.

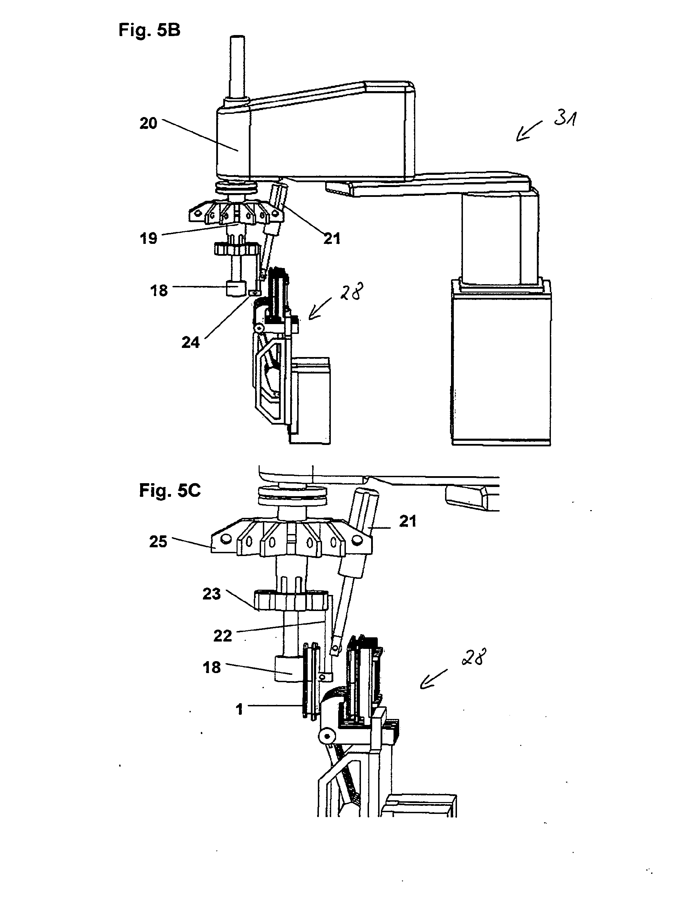

Wie aus Figur 5B hervorgeht, wird das Rundungs- oder Rollierwerkzeug 19 von einem Scara-Roboter 20 geführt, der sich zum schrittweisen Transfer der Vollpolsegmente 2 der Polkette an den Rundungs- oder Rollierzylinder jeweils eines Schwenkzylinders 21 bedient, der aber aus Gründen der Übersichtlichkeit nur einmal dargestellt ist.

Weitere Einzelheiten des Rundungs- oder Rollierwerkzeuges 19 sind in Figur 5C bezeichnet. So ist jeder der insgesamt - in diesem Statorbeispiel - sechs Schwenkzylinder 21 in einem Winkelkranz 25 des Rundungs- oder Rollierwerkzeugs 19 drehbar gelagert. Am Ende des Zylinderstößels ist gelenkig eine U-förmi-ge Andrückspange 22 montiert, die mit einem ihrer beiden kurzen Schenkel in Nuten einer Teilscheibe 23 geführt wird, während an ihrem anderen kurzen Schenkel ein schwingbar gelagertes Fixierprisma 24 den aus der Polkette transferierten Vollsegmentpol an den Rundungs- oder Rollierzylinder 18 drückt (siehe auch Fig. 5C).

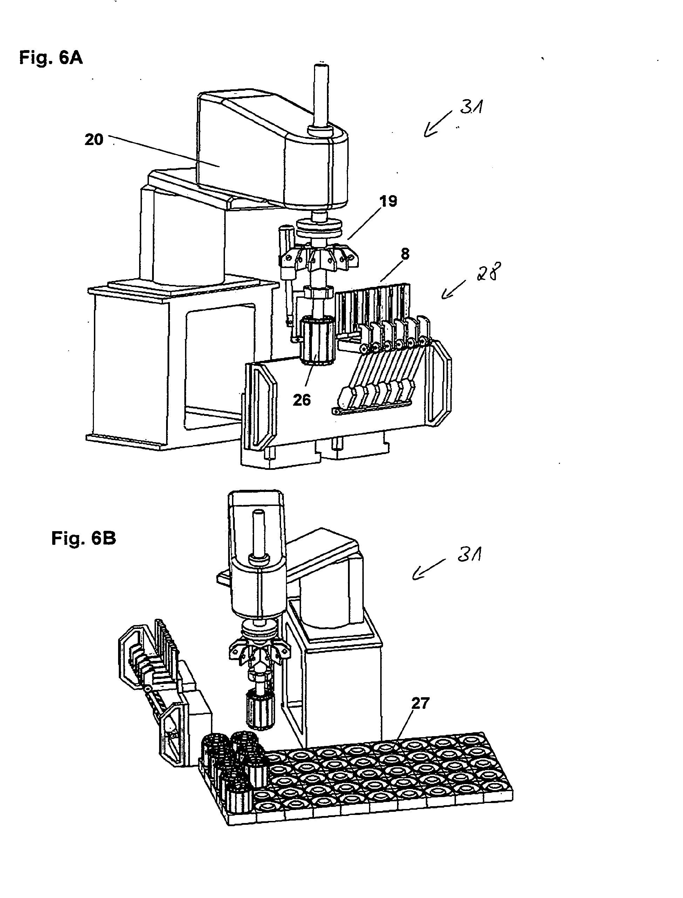

Für diesen Transfervorgang werden die in Fig. 5A gezeigten Andrückhebel 17 zurückgenommen (siehe dazu Fig. 6A). Der Rundungs- oder Rolliervorgang geht in der Weise vonstatten, dass das Rundungs- oder Rollierwerkzeug 19 rotierend vom Scara-Roboter 20 parallel zur Polkette an dieser entlang geführt wird und nacheinander die Pole mit den zugehörigen Schwenkzylindern 21 an den Rundungs- oder Rollierzylinder 18 anlegend mitnimmt. Die angelegten Vollpolsegmente 2 werden dabei von den Fixierprismen 24 in einem oberen Teil ihrer Paketlänge beaufschlagt. Es ist möglich, auf diese Weise ohne größere Umrüstung auch Vollpolsegmente 2 unterschiedlicher Paketlänge bei einem Typenwechsel zu runden oder rollieren. Die Übergangsdrähte der Wicklung zwischen Polspulen eines Stranges folgen durch entsprechende Verlegung und Bemessung dem Runden oder Rollieren problemlos.

In Figur 6A ist der Rundungs- oder Rolliervorgang abgeschlossen dargestellt. Die Prismen 8 der Halterung 11 der Rundungs- oder Rollierstation 31 sind geleert und der fertig gebildete Stator 26 befindet sich am Rundungs- oder Rollierzylinder 18. Der gebildete Stator 26 wird - wie es Fig. 6B zeigt - zum Beispiel in einen Blister 27 gesetzt, weil es der Anwendungsfall üblicherweise vorsieht, ihn später aus diesem heraus in ein Gehäuse zu fügen, was eine Verbindung der Vollpolsegmente 2 zum Beispiel durch Laserschweißen erübrigt. In anderen Anwendungsfällen kann dies aber alternativ vorgesehen werden, ebenso natürlich auch ein Kleben, Umspritzen oder dergleichen.

### Bezugszeichenliste

(1) Oberes Isolierteil / Kunststoffteil
(2) Vollpolsegment
(3) Unteres Isolierteil / Kunststoffteil
(4) Basisblock
(5.1) Zuganker oben
(5.2) Zuganker unten
(6.1) Spange oder Scharnier oben
(6.2) Spange oder Scharnier unten
(7) Polkette
(8) Prisma
(9) Zugklaue
(10) Magnet oder mechanischen Einrichtung
(11) Halterung mit Polkette / Halteeinrichtung
(12) Werkstückträger
(13) Linearmotor-Schlitten
(14) Drahtführer-Traverse / Bewicklungseinrichtung
(15) Drahtführer-Gruppe
(16) Gelenk-Parallelschubstangen
(17) Andrückhebel
(18) Rundungs- oder Rollierzylinder
(19) Rundungs- oder Rollierwerkzeug / Vorrichtung
(20) Scara-Roboter / Einrichtung
(21) Schwenkzylinder
(22) Andrückspange
(23) Teilscheibe
(24) Fixierprisma
(25) Winkelkranz
(26) Stator
(27) Blister
(28) Halterung
(29) Bewicklungselemente
(30) Bewicklungsstation
(31) Rundungs- oder Rollierstation
(32) Isolierbereich

## Patentansprüche

1. Verfahren zur Bewicklung von in Kreisringsegmente aufgeteilten Statoren von Innenläufermotoren im Anordnungs-Vorstadium einer linearen Polkette (7),
**dadurch gekennzeichnet,**
**dass** eine Mehrzahl Vollpolsegmente (2) vor dem Bewickeln mit mindestens einem Kunststoffteil (1, 3) untereinender verbunden wird.

2. Verfahren nach Anspruch 1,
**dadurch gekennzeichnet,**
**dass** nach dem Bewickeln zumindest ein Teil (5.1, 5.2, 6.1, 6.2) eines Kunststoffteils (1, 3) abgetrennt wird.

3. Verfahren nach Anspruch 2,
**dadurch gekennzeichnet,**
**dass** die Vollpolsegmente (2) durch das Abtrennen zumindest eines Teils (5.1, 5.2, 6.1, 6.2) eines Kunststoffteils (1, 3) vereinzelt werden.

4. Verfahren nach Anspruch 1 bis 3,
**dadurch gekennzeichnet,**
**dass** die bewickelte Polkette (7) durch einen Rundung-oder Rollier-Vorgang in eine zylindrische Endgestalt (26) überführt wird.

5. Vorrichtung zur Durchführung eines Verfahrens nach Anspruch 1 bis 4, eine Bewicklungseinrichtung (14) und eine Halteeinrichtung (11) aufweisend,
**dadurch gekennzeichnet,**
**dass** die Halteeinrichtung (11) zur Aufnahme einer mit mindestens einem Kunststoffteil untereinender verbundenen Mehrzahl Vollpolsegmente (2), die sich im Anordnungs-Vorstadium einer linearen Polkette (7) befinden, geeignet ist.

6. Vorrichtung nach Anspruch 5,
**dadurch gekennzeichnet,**
**dass** die Bewicklungseinrichtung (14) um eine zur Reihungsrichtung der Polkette parallele Achse (X), vorzugsweise in einem Winkelbereich von bis zu 135°, schwenkbar ausgeführt ist.

7. Vorrichtung nach Anspruch 5 und 6,
**dadurch gekennzeichnet,**
**dass** die Halteeinrichtung (11) der Polkette entlang einer, im Wesentlichen rechtwinklig zu zwei Bewegungsachsen (Y, Z) der Bewicklungseinrichtung (14) verlaufenden, Bewegungsachse (X), vorzugsweise durch mindestens einen Linearmotor, verfahren werden kann, wobei vorzugsweise die Bewegungsachsen (Y, Z) der Bewicklungseinrichtung (14) im Wesentlichen rechtwinklig zueinander angeordnet sind.

8. Vorrichtung nach Anspruch 5 bis 7,
**dadurch gekennzeichnet,**
**dass** die Bewicklungseinrichtung (14) eine Mehrzahl Bewicklungselemente (29), vorzugsweise Drahtführer eines Nadelwickelsystems, aufweist, die für die simultane Bewicklung einer Mehrzahl Vollpolsegmente (2) einer Polkette (7), vorzugsweise der simultanen Bewicklung einer Mehrzahl Vollpolsegmente (2) verschiedener Phasen, und/ oder einer Mehrzahl Polketten (7) geeignet sind.

9. Vorrichtung nach Anspruch 5 bis 8,
**dadurch gekennzeichnet,**
**dass** ein Elektromagnet oder eine mechanische Vorrichtung für den Transfer der Polketten (7) von der Halteeinrichtung (11) einer Bewicklungsstation (30) zur Halterung (28) einer Rundungs- oder Rollierstation (31) vorgesehen ist, wobei der Elektromagnet vorzugweise so ausgelegt ist, dass er geeignet ist, entstandene Aufmagnetisierungen der Vollpolsegmente (2) zu löschen.

10. Vorrichtung nach Anspruch 5 bis 9,
**dadurch gekennzeichnet,**
**dass** zur Rundung oder Rollierung der Polkette (7) eine Einrichtung, vorzugsweise ein Scara-Roboter (20), vorgesehen ist, die eine Vorrichtung (19) zur Überführung der Anordnung der Vollpolsegmente (2) in deren zylindrische Endgestalt (26), vorzugsweise bei vorgegebenem oder vor-gebbarem Innendurchmesser der zylindrischen Endgestalt (26), aufweist.

11. Vorrichtung nach Anspruch 5 bis 10,
**dadurch gekennzeichnet,**
**dass** eine Vorrichtung zum stoffschlüssigen Verbinden der Vollpolsegmente (2) vorgesehen ist.

12. Vorrichtung nach Anspruch 5 bis 11,
**dadurch gekennzeichnet,**
**dass** Fixiervorrichtungen (17) zur Sicherung der Vollpolsegmente (2) nach dem Abtrennvorgang vorgesehen sind.

13. Kunststoffteil (1, 3) zur Verwendung als Hilfsmittel in einem Verfahren nach Anspruch 1 bis 4,
**dadurch gekennzeichnet,**
**dass** das Kunststoffteil (1, 3) eine Mehrzahl Isolierbereiche (32), die zur Isolierung der Drahtwicklung auf einem Vollpolsegment (2) geeignet sind, und mindestens einen, vorzugsweise spangenartigen, Verbindungsbereich (5.1, 5.2, 6.1, 6.2) zur Verbindung der Isolierbereiche (32) aufweist.
